# EUROPEAN PATENT APPLICATION

(11) **EP 3 016 005 A1**
(43) Date of publication of application: **04.05.2016**
(21) Application number: 15166234.3
(22) Date of filing: 04.05.2015
(51) Int. Cl.: G06F 17/30

(54) **METHOD AND SYSTEM FOR OFFERING OF SIMILAR PHOTOS IN REAL TIME BASED ON PHOTOGRAPHING CONTEXT INFORMATION OF A GEOGRAPHICALLY PROXIMATE USER GROUP**

(30) Priority: 31.10.2014 KR 20140150231; 22.01.2015 KR 20150010562
(71) Applicant: Korea Advanced Institute Of Science And Technology, Daejeon 305-701 (KR)
(72) Inventor: Lee, Ui Chin, 305-701 Daejeon (KR); Lee, Jae Gil, 305-701 Daejeon (KR); Kang, Seong Jun, 135-080 Seoul (KR); Shin, Daee Hee, 135-080 Seoul (KR); Park, June Sung, 135-080 Seoul (KR)
(74) Representative: V.O.

(57) **Abstract**

A method and system for offering a real-time search of similar photos based on photographing context information of a short-range user group is provided. A method of offering a real-time search of similar photos may include searching for and displaying photos included in a predetermined radius from among photos taken by users of a user group including a first user, based on a current photographing location of the first user; selecting, from among the photos included in the predetermined radius as a similar photo candidate, a photo having an included angle between a direction vector of the current photographing location of the first user and a direction vector of the photo within a predetermined range; and sorting and thereby displaying thumbnail images of the selected similar photo candidates based on a similarity value.

## Description

### CROSS-REFERENCE TO RELATED APPLICATION

This application claims the priority benefit of Korean Patent Application No. 10-2014-0150231, filed on October 31, 2014 and Korean Patent Application No. 10-2015-0010562, filed on January 22, 2015, in the Korean Intellectual Property Office, the disclosure of which is incorporated herein by reference.

### BACKGROUND

### 1. Field of the Invention

The present invention relates to a method and system that enables a user, for example, a friend and a relative, of a user group including at least one user to take a photo using a smart device having a camera function and to share the photo.

### 2. Description of the Related Art

In many activities, for example, a group tour and a travel, in which a plurality of persons participates, a few persons may take a photo together as a single group. In this case, a user needs to request a photo sharing every time in order to view a photo taken by another user, which may be very inconvenient. Thus, in many cases, users iteratively take photos if they want to keep the photos. Recently, solving such inconvenience has become an issue. As a single solution, proposed is a method that enables users of a user group to share an album folder located in a cloud server. The proposed method includes a user interaction process that requires a user to verify a sharing photo using a separate application (App) instead of using a photographing viewfinder App, which may be regarded to be inconvenient. Further, the proposed method may not sufficiently provide photographing context information, that is, information about when, where, and in which directions group members have taken photos. Accordingly, due to insufficient recognition of group members about a photographing context, a group photographing activity may generally become individual photographing activities. Such individual photographing activities may lead to iteratively photographing similar scenes and forgetting to take a necessary scene.

### SUMMARY

An aspect of the present invention provides a method of calculating a similarity between taken photos based on a photographing location of a user and a direction and a method of visualizing similar photos, and also provides a method and system that may prevent users from iteratively taking similar photos and forgetting to take a necessary photo by not sharing photographing information in a group in real time.

According to an aspect of the present invention, there is provided a method of offering a real-time search of similar photos based on photographing context information of a geographically proximate user group, the method including searching for and displaying photos included in a predetermined radius from among photos taken by users of a user group including a first user, based on a current photographing location of the first user; selecting, from among the photos included in the predetermined radius as a similar photo candidate, a photo having an included angle between a direction vector of the current photographing location of the first user and a direction vector of the photo within a predetermined range; and sorting and thereby displaying thumbnail images of the selected similar photo candidates based on a similarity value.

The searching for and displaying may include displaying each group member to be recognizable by applying a unique marker for each group member of the user group including the first user.

The searching for and displaying may include changing information about the photos included in the predetermined radius in response to a change in the current photographing location of the first user.

Photographing angles of view (AOV) of the photos included in the predetermined radius may be visualized in real time and be automatically changed in response to the change in the current photographing location of the first user.

The photographing location and the direction vector of the photographing location may be shared by group members of the user group in real time when taking a photo.

The selecting may include performing a similarity calculation on the selected similar photo candidate using an included angle or image based similarity calculation algorithm.

The similarity value may be used to display a maximum similarity value calculated from an image selected from among the similar photo candidates on a similarity value information area.

According to an aspect of the present invention, there is provided a system for offering a real-time search of similar photos based on photographing context information of a geographically proximate user group, the system including a similar photo search module configured to search for and display photos included in a predetermined radius among photos taken by users of a user group including a first user, based on a current photographing location of the first user; a similarity comparator configured to select, from among the photos included in the predetermined radius as a similar photo candidate, a photo having an included angle between a direction vector of the current photographing location of the first user and a direction vector of the photo within a predetermined range; and a display configured to sort and thereby display thumbnail images of the selected similar photo candidates based on a similarity value.

The similar photo search module may change information about the photos included in the predetermined radius in response to a change in the current photographing location of the first user. The similar photo search module may visualize photographing angles of view of the photos included in the predetermined radius in real time, and may automatically change the photographing AOV in response to the change in the current photographing location of the first user.

The similarity comparator may perform a similarity calculation on the selected similar photo candidate using an included angle or image based similarity calculation algorithm.

### EFFECTS

According to embodiments of the present invention, it is possible to calculate a similarity between taken photos based on a photographing location of a user and a direction and to visualize similar photos. Also, it is possible to prevent users from iteratively taking similar photos and forgetting to take a necessary photo, which is potentially caused by not sharing photographing information in a group in real time. Further, a user may readily take a photo using a camera or a smart device equipped with a camera function, and a variety of photographing applications operating on a smartphone are present and thus, the user may easily adapt to a photographing viewfinder.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a block diagram illustrating a configuration of a system for offering a real-time search of similar photos based on photographing context information of a geographically proximate user group according to an embodiment of the present invention;
FIG. 2 illustrates a photo viewer according to an embodiment of the present invention;
FIG. 3 is a flowchart illustrating a method of offering a real-time search of similar photos based on photographing context information of a geographically proximate user group according to an embodiment of the present invention;
FIGS. 4A and 4B illustrate examples of sharing a photographing location and a direction vector according to an embodiment of the present invention;
FIG. 5 illustrates an example of automatically updating a photo location marker within a radius in response to a change in a photographing location of a user according to an embodiment of the present invention;
FIG. 6 illustrates a method of automatically updating an angle of view (AOV) in response to a change in a photographing AOV according to an embodiment of the present invention;
FIG. 7 illustrates an example of an included angle between a direction vector of a currently taken photo and a direction vector of a previously taken photo within a predetermined range according to an embodiment of the present invention; and
FIG. 8 illustrates an example of displaying a photo viewer and similarity value information according to an embodiment of the present invention.

### DETAILED DESCRIPTION

Reference will now be made in detail to exemplary embodiments of the present invention, examples of which are illustrated in the accompanying drawings, wherein like reference numerals refer to like elements throughout. Exemplary embodiments are described below to explain the present invention by referring to the figures.

Hereinafter, embodiments of the present invention will be described with reference to the accompanying drawings.

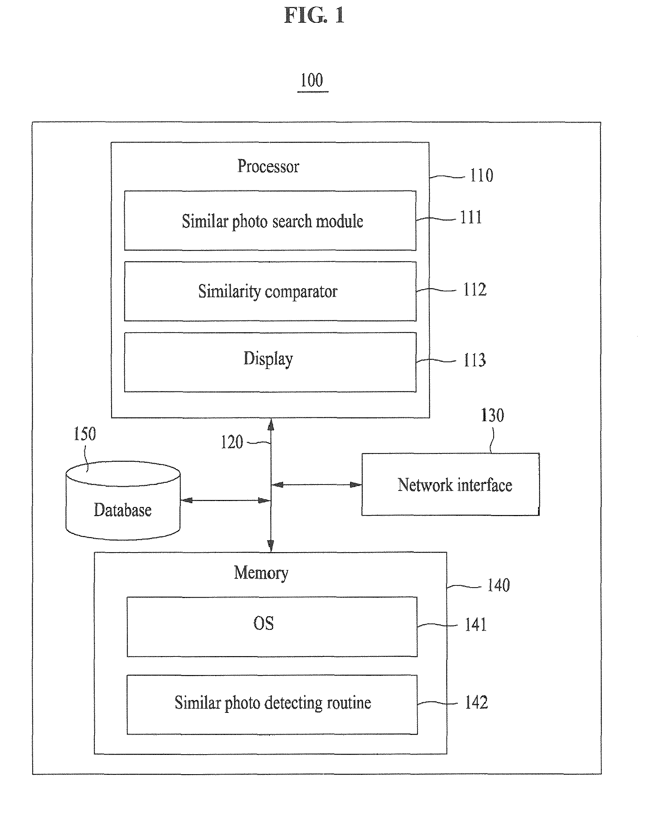

FIG. 1 is a block diagram illustrating a configuration of a system (hereinafter, also referred to as a real-time similar photo search providing system) for offering a real-time search of similar photos based on photographing context information of a geographically proximate user group according to an embodiment of the present invention.

Referring to FIG. 1, the real-time similar photo search providing system 100 may include a processor 110, a bus 120, a network interface 130, a memory 140, and a database 150. The memory 140 may include an operating system (OS) 141 and a similar photo detecting routine 142. The processor 110 may include a similar photo search module 111, a similarity comparator 112, and a display 113. According to other embodiments, the real-time similar photo search providing system 100 may include a further number of constituent elements compared to the number of constituent elements of FIG. 1. However, there is no need to clearly illustrate many constituent elements according to the related art. For example, the real-time similar photo search providing system 100 may also include other constituent elements such as a display and a transceiver.

The memory 140, as non-transitory computer-readable recording media, may include a permanent mass storage device such as random access memory (RAM), read only memory (ROM), and a disk drive. Also, a program code for the OS 141 and the similar photo detecting routine 142 may be stored in the memory 140. The software constituent elements may be loaded from non-transitory computer-readable media separate from the memory 140 using a drive mechanism (not shown). The non-transitory computer-readable media may include computer-readable media such as a floppy disk, a tape, a DVD/CD-ROM drive, and a memory card. According to other embodiments, the software constituent elements may be loaded to the memory 140 through the network interface 130, instead of using the non-transitory computer readable media.

The bus 120 may enable communication and data transmission between the constituent elements of the real-time similar photo search providing system 100. The bus 120 may be configured using a high-speed serial bus, a parallel bus, a storage area network (SAN), and/or other appropriate communication technologies.

The network interface 130 may be a computer hardware constituent element to connect the real-time similar photo search providing system 100 to a computer network. The network interface 130 may connect the real-time similar photo search providing system 100 to the computer network through a wireless or wired connection.

The database 150 may serve to store and maintain all of information such as a photographing location and a direction vector required to detect a similar photo. Although FIG. 1 illustrates that the database 150 is included in the real-time similar photo search providing system 100, it is only an example. Accordingly, the database 150 may be omitted based on a system configuration method or environment. Alternatively, the entire or a portion of the database 150 may be present as an external database configured on a separate system.

The processor 110 may be configured to process an instruction of a computer program by performing a basic arithmetic and logic operation, and an input/output (I/O) operation of the real-time similar photo search providing system 100. The instruction may be provided from the memory 140 or the network interface 130 to the processor 110 through the bus 120. The processor 110 may be configured to execute a program code for the similar photo search module 111, the similarity comparator 112, and the display 113. The program code may be stored in a storage device such as the memory 140.

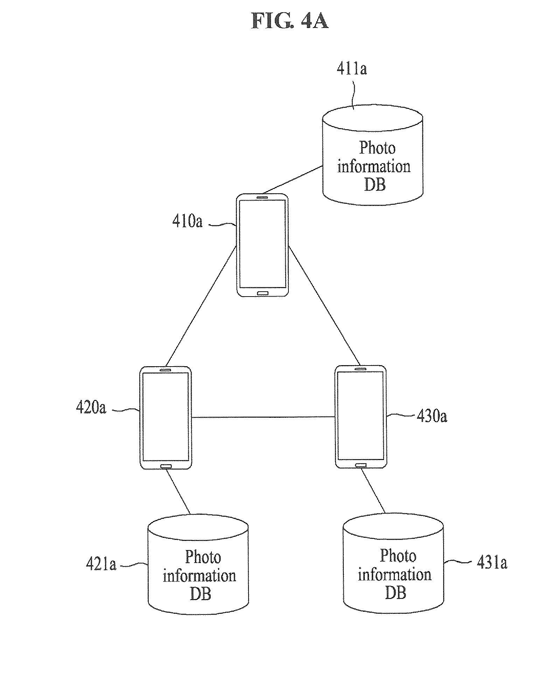

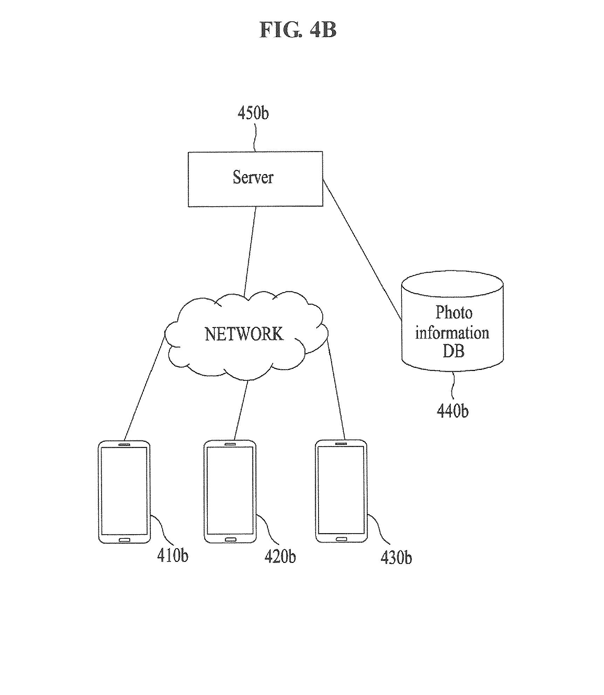

The similar photo search module 111, the similarity comparator 112, and the display 113 may be configured to perform operations 310 through 330 of FIG. 4.

The real-time similar photo search providing system 100 may include the similar photo search module 111, the similarity comparator 112, and the display 113.

The similar photo search module 111 may search for photos included in a predetermined radius from among photos taken by users of a user group including a first user, based on a current photographing location of the first user. Here, the first user may refer to a user who currently takes a photo among a plurality of users taking photos and sharing information such as an image, a photographing location, and a direction vector. Each group member may be recognizable by applying a unique marker for each group member of the user group including the first user.

Information about the photos included in the predetermined radius may be changed in response to a change in the current photographing location of the first user. Also, photographing angles of view (AOV) of the photos included in the predetermined radius may be visualized in real time, and may be automatically changed in response to the change in the current photographing location of the first user.

The photographing location and the direction vector of the photographing location may be shared by group members of the user group in real time when taking a photo.

The similarity comparator 112 may select, from among the photos included in the predetermined radius as a similar photo candidate, a photo having an included angle between a direction vector of the current photographing location of the first user and a direction vector of the photo within a predetermined range.

The similarity comparator 112 may select, from among the photos included in the predetermined radius, only a photo having an included angle between the direction vector of the current photographing location and a direction vector of each taken photo being less than or equal to a predetermined camera AOV. Through this, the similarity comparator 112 may quickly select a photo likely to be similar to a currently taken photo as a similar photo candidate.

A similarity calculation may be performed on the selected similar photo candidate. A similarity calculation method may utilize an included angle or image based similarity calculation algorithm. An included angle based similarity may be calculated using "(AOV-included angle)/AOV*100". An image comparison based similarity may be calculated using a scale-invariant feature transform (SIFT) algorithm or a histogram method.

The image based similarity calculation may be used in a case in which an image to be taken is present in a current viewfinder. That is, the image based similarity calculation method refers to a situation in which a user is to actually take a photo and excludes a situation in which the user looks down to verify a photo.

The display 113 may sort and thereby display thumbnail images of the selected similar photo candidates based on their similarity values. In this instance, the similarity value may be used to display a maximum similarity value calculated from an image selected from among the similar photo candidates on a similarity value information area.

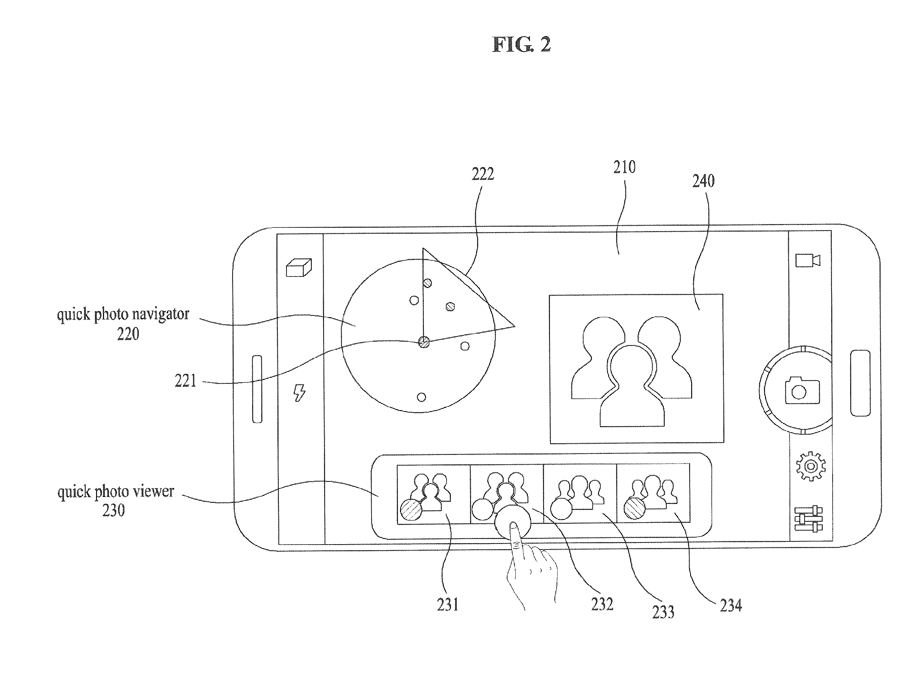

FIG. 2 illustrates a photo viewer according to an embodiment of the present invention.

Referring to FIG. 2, photographing location and direction information may be utilized to provide contextual recognition information about photos taken at proximate locations by users of a user group. A user having taken a photo is to provide a new viewfinder capable of searching for a similar photo in real time. Herein, it is referred to as a "quick photo navigator 220".

The quick photo navigator 220 may display, on a map in a marker form, photos included in a predetermined radius 222 based on a location of a first user 221 that is to currently take a photo, among photos taken by users of a user group including the first user 221. Group members may be easily recognized by applying a unique marker for each group member of the user group. Also, when a location of the first user 221 is changed, that is, when the first user 221 moves, information of the photos included in the radius 222 may be automatically replaced with a photo included in a radius set based on the changed location of the first user 221.

For example, when a user is assumed to take a photo in a direction 210, a photographing AOV may be visualized in real time. When a bearing of the first user 221 is changed, for example, when the first user 221 turns with holding a camera, a bearing of an AOV may also be automatically changed.

When an included angle between a direction vector of the current photographing location of the first user 221 and a direction vector of a photo included in the radius 222 is within a predetermined range, the corresponding photo may be selected as a similar photo candidate.

A quick photo viewer 230 may display thumbnail images 231, 232, 233, and 234 of similar photo candidates selected by the quick photo navigator 220. The quick photo viewer 230 may quickly browse photos while supporting a horizontal scrolling. The quick photo viewer 230 may include a function of, in response to a touch on a photo, enlarging the touched photo to be a predetermined size and displaying the enlarged photo.

Here, photos may be sorted and displayed based on a predetermined value such as a photographing time and a similarity with an image present in a current viewfinder. An indication for identifying a photographer may be displayed around a photo so that photographer information of the photo may be easily recognized. When photos are sorted based on a similarity value, similarity value information may also be displayed.

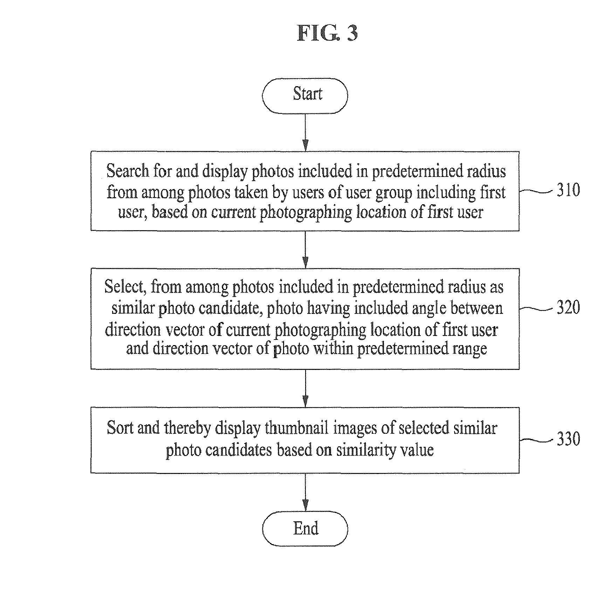

FIG. 3 is a flowchart illustrating a method of offering a real-time search of similar photos based on photographing context information of a geographically proximate user group according to an embodiment of the present invention.
Referring to FIG. 3, the method of offering a real-time search of similar photos based on photographing context information of a geographically proximate user group may include operation 310 of searching for and displaying photos included in a predetermined radius among photos taken by users of a user group including a first user, based on a current photographing location of the first user, operation 320 of selecting, from among the photos included in the predetermined radius as a similar photo candidate, a photo having an included angle between a direction vector of the current photographing location of the first user and a direction vector of the photo within a predetermined range, and operation 330 of sorting and thereby displaying thumbnail images of the selected similar photo candidates based on a similarity value.

In operation 310, photos included in a predetermined radius may be retrieved from among photos taken by users of a user group including a first user, based on the current photographing location of the first user and thereby be displayed. Here, the first user may refer to a user who currently takes a photo among a plurality of users taking photos and sharing information such as an image, a photographing location, and a direction vector. Each group member may be recognizable by applying a unique marker for each group member of the user group including the first user.

Information about the photos included in the predetermined radius may be changed in response to a change in the current photographing location of the first user. Also, photographing AOV of the photos included in the predetermined radius may be visualized in real time, and may be automatically changed in response to the change in the current photographing location of the first user.

The photographing location and the direction vector of the photographing location may be shared by group members of the user group in real time when taking a photo.

In operation 320, a photo having an included angle between a direction vector of the current photographing location of the first user and a direction vector of the photo within a predetermined range may be selected as a similar photo candidate from among the photos included in the predetermined radius.

In this instance, only a photo having an included angle between the direction vector of the current photographing location and a direction vector of each taken photo being less than or equal to a predetermined camera AOV may be selected from among the photos included in the predetermined radius. Through this, a photo likely to be similar to an image on the viewfinder or a currently taken photo may be quickly selected as a similar photo candidate.

A similarity calculation may be performed on the selected similar photo candidate. A similarity calculation method may utilize an included angle or image based similarity calculation algorithm. An included angle based similarity may be calculated using "(AOV-included angle)/AOV*100". An image comparison based similarity may be calculated using image processing techniques including a SIFT and a histogram method.

The image based similarity calculation may be used in a case in which an image to be taken is present in a current viewfinder. That is, the image based similarity calculation method refers to a situation in which a user is to actually take a photo and excludes a situation in which the user looks down to verify a photo.

In operation 330, thumbnail images of the selected similar photo candidates may be sorted and thereby displayed based on a similarity value. In this instance, the similarity value may be used to display a maximum similarity value calculated from an image selected from among the similar photo candidates on a similarity value information area.

FIGS. 4A and 4B illustrate examples of sharing a photographing location and a direction vector according to an embodiment of the present invention.

A user group denotes a group of users physically adjacent to one another in a predetermined range, and a group member denotes an individual within the user group. Referring to FIGS. 4A and 4B, group members may share photographing information, a photographing location, and a direction vector in real time through a communication structure.

In a communication structure of FIG. 4A, a photographing location and a direction vector of a photo may be automatically shared between group members in real time, and may be stored in local databases, for example, photo information databases 411a, 421a, and 431a of smart devices 410a, 420a, and 430a, or may be stored in databases of a server 450b of FIG. 4B.

In a communication structure of FIG. 4B, a group member may verify photographing information of each group member in real time through local databases, for example, photo information databases 410b, 420b, and 430b or through the databases of the server 450b.

Photographing location information of users included in a user group may be obtained using a global positioning system (GPS), and direction vector information may be obtained using a magnetometer.

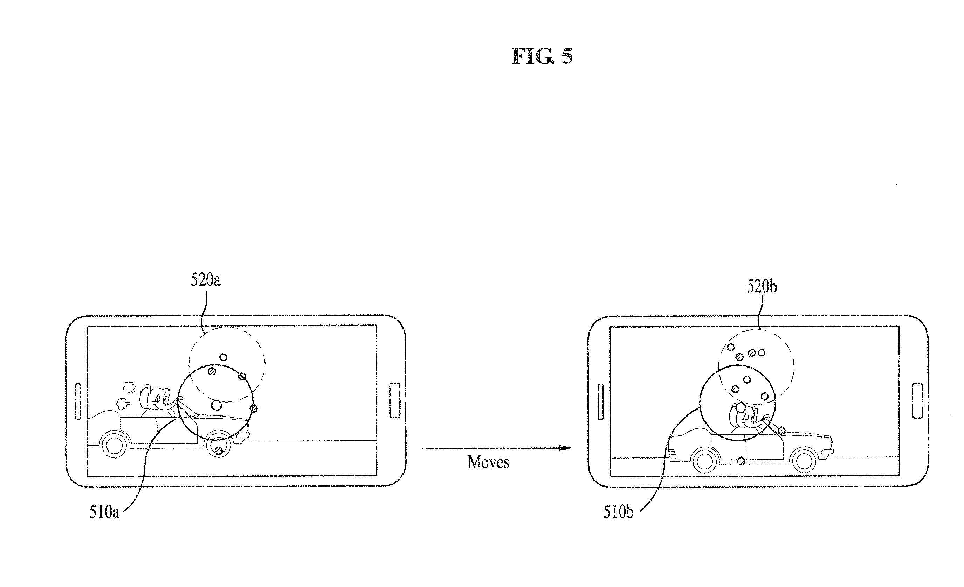

FIG. 5 illustrates an example of automatically updating a photo location marker within a radius in response to a change in a photographing location of a user according to an embodiment of the present invention.

Referring to FIG. 5, a quick photo navigator visualizes a photographing location 510a of a first user and photographing locations of photos taken by users of a user group using a marker 520a. That is, when a current photographing location of the first user is changed, for example, when the first user moves from the photographing location 510a to a location 510b, a photo location marker of the users within a predetermined radius based on GPS location information may be automatically updated with a marker 520b.

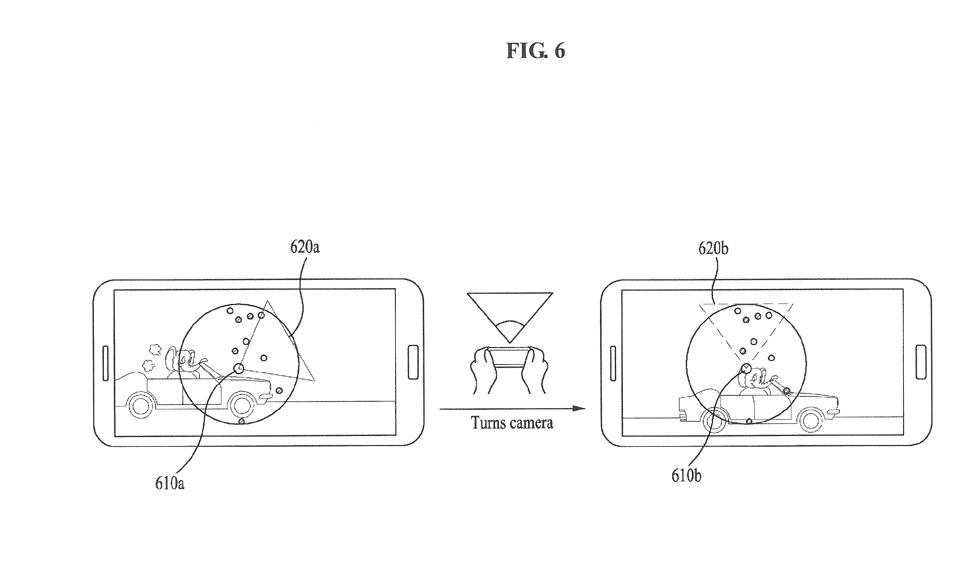

FIG. 6 illustrates a method of automatically updating an AOV in a quick photo navigator in response to a change in a photographing AOV according to an embodiment of the present invention.

Referring to FIG. 6, a quick photo navigator may visualize a photographing location 610a of a first user and a camera AOV bearing of users of a group user using a marker 620a. When a direction vector of the first user is changed, for example, when the first user moves horizontally at a location 610b with holding a camera, a camera AOV bearing of the quick photo navigator may be automatically updated with a marker 620b based on a magnetometer sensor value.

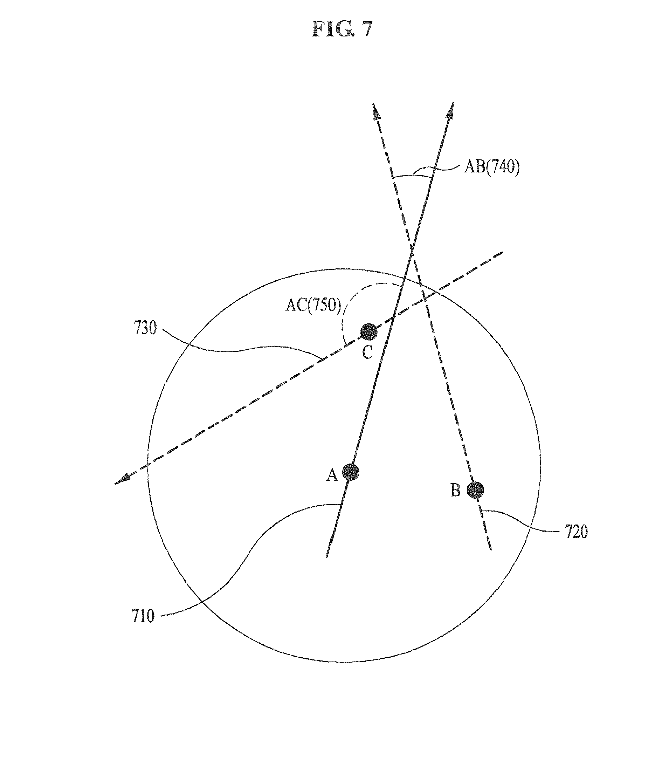

FIG. 7 illustrates an example of an included angle between a direction vector of a currently taken photo and a direction vector of a previously taken photo within a predetermined range according to an embodiment of the present invention.

In this instance, only a photo having an included angle between a direction vector of a current photographing location and a direction vector of a previously taken photo being less than or equal to a predetermined camera AOV may be selected from among photos included in the predetermined radius. Through this, a photo likely to be similar to the currently taken photo may be quickly selected as a similar photo candidate.

For example, referring to FIG. 7, an included angle AB 740 between current photographing direction vectors A 710 and B720 is less than a predetermined camera AOV and thus, a corresponding photo may be a similar photo candidate. However, an included angle AC 750 between direction vectors A710 and C730 is greater than the camera AOV and thus, a corresponding photo may not be selected as a similar photo candidate.

A similarity calculation may be performed on the selected similar photo candidate. A similarity calculation method may utilize an included angle or image based similarity calculation algorithm. An included angle based similarity may be calculated using "(AOV-included angle)/AOV*100". In addition, an image based similarity calculation may be performed using well-known image processing techniques including a SIFT algorithm and a histogram method.

The image based similarity calculation may be used in a case in which an image to be taken is present in a current viewfinder. That is, the image based similarity calculation method refers to a situation in which a user to actually take a photo and excludes a situation in which the user looks down to verify a photo.

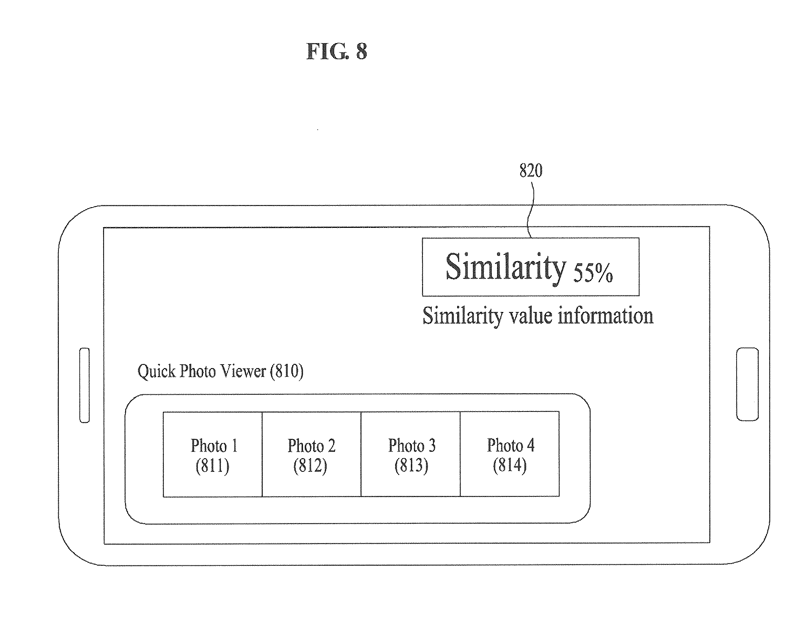

FIG. 8 illustrates an example of displaying a photo viewer and similarity value information according to an embodiment of the present invention.

Similar photo candidates 811, 812, 813, and 814 selected from a quick photo viewer 810 may be displayed based on calculated similarities. In this instance, the similar photo candidates 811, 812, 813, and 814 may be displayed on the quick photo viewer 810 in descending order based on the calculated similarities. For example, referring to FIG. 8, the four similar photo candidates 811, 812, 813, and 814 may be sequentially displayed based on the calculated similarities. The calculated similarities may be photo 1>photo 2>photo 3>photo 4.

A maximum value of calculated similarities may be indicated. That is, the maximum similarity value of a selected image may be displayed on a similarity value information area 820.

The units described herein may be implemented using hardware components, software components, or a combination thereof. For example, a processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The above-described example embodiments of the present invention may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A method of offering a real-time search of similar photos, the method comprising:
searching for and displaying photos comprised in a predetermined radius from among photos taken by users of a user group comprising a first user, based on a current photographing location of the first user;
selecting, from among the photos comprised in the predetermined radius as a similar photo candidate, a photo having an included angle between a direction vector of the current photographing location of the first user and a direction vector of the photo within a predetermined range; and
sorting and thereby displaying thumbnail images of the selected similar photo candidates based on a similarity value.

2. The method of claim 1, wherein the searching for and displaying comprises displaying each group member to be recognizable by applying a unique marker for each group member of the user group comprising the first user.

3. The method of claim 1, wherein the searching for and displaying comprises changing information about the photos comprised in the predetermined radius in response to a change in the current photographing location of the first user.

4. The method of claim 3, wherein photographing angles of view of the photos comprised in the predetermined radius are visualized in real time and are automatically changed in response to the change in the current photographing location of the first user.

5. The method of claim 1, wherein the photographing location and the direction vector of the photographing location are shared by group members of the user group in real time when taking a photo.

6. The method of claim 1, wherein the selecting comprises performing a similarity calculation on the selected similar photo candidate using an included angle or image based similarity calculation algorithm.

7. The method of claim 1, wherein the similarity value is used to display a maximum similarity value calculated from an image selected from among the similar photo candidates on a similarity value information area.

8. A system for offering a real-time search of similar photos, the system comprising:
a similar photo search module configured to search for and display photos comprised in a predetermined radius among photos taken by users of a user group comprising a first user, based on a current photographing location of the first user;
a similarity comparator configured to select, from among the photos comprised in the predetermined radius as a similar photo candidate, a photo having an included angle between a direction vector of the current photographing location of the first user and a direction vector of the photo within a predetermined range; and
a display configured to sort and thereby display thumbnail images of the selected similar photo candidates based on a similarity value.

9. The system of claim 8, wherein the similar photo search module is configured to change information about the photos comprised in the predetermined radius in response to a change in the current photographing location of the first user.

10. The system of claim 8, wherein the similar photo search module is configured to visualize photographing angles of view of the photos comprised in the predetermined radius in real time, and to automatically change the photographing angle of view in response to the change in the current photographing location of the first user.

11. The system of claim 8, wherein the similarity comparator is configured to perform a similarity calculation on the selected similar photo candidate using an included angle or image based similarity calculation algorithm.

12. The system of claim 8, wherein the display is configured to display a maximum similarity value calculated from an image selected from among the similar photo candidates on a similarity value information area.
